# EUROPÄISCHE PATENTSCHRIFT

(11) **EP 3 154 801 B1**
(45) Veröffentlichungstag und Bekanntmachung des Hinweises auf die Patenterteilung: **14.03.2018**
(21) Anmeldenummer: 15728410.0
(22) Anmeldetag: 05.06.2015
(51) Int. Cl.: B60G 17/0165, B60G 17/018, B60G 17/06, B60G 13/14, G06K 9/00, B60W 10/22, B60W 20/00, B60W 40/06

(54) **VERFAHREN ZUM BETREIBEN EINES RADAUFHÄNGUNGSSYSTEMS**
METHOD FOR OPERATING A WHEEL SUSPENSION SYSTEM
PROCÉDÉ POUR FAIRE FONCTIONNER UN SYSTÈME DE SUSPENSION DE ROUE

(30) Priorität: 13.06.2014 DE 102014008675
(43) Veröffentlichungstag der Anmeldung: 19.04.2017
(73) Patentinhaber: Audi AG, 85045 Ingolstadt (DE)
(72) Erfinder: UNGER, Andreas, 85080 Gaimersheim (DE)
(74) Vertreter: Reichert, Thomas Klaus
(86) Internationale Anmeldenummer: PCT/EP2015/001144
(87) Internationale Veröffentlichungsnummer: WO 2015/188926

(56) Entgegenhaltungen:
- WO-A2-2011/159874
- DE-A1-102009 036 731
- US-A1- 2009 079 145
- US-A1- 2013 158 799

## Beschreibung

Die Erfindung betrifft ein Verfahren zum Betreiben eines Radaufhängungssystems eines Kraftfahrzeugs sowie ein System zum Betreiben eines Radaufhängungssystems eines Kraftfahrzeugs.

Sofern ein Kraftfahrzeug über eine unebene Strecke fährt, wird üblicherweise über die Dämpfer eines Fahrgestells des Kraftfahrzeugs Energie dissipiert. Allerdings ist es über geeignete Dämpferkonzepte möglich, Energie zu rekuperieren und somit zu gewinnen.

Zur Berechnung der zu rekuperierenden Energie wird zunächst eine Leistung des Dämpfers betrachtet. Die Leistung ergibt sich aus einem Produkt einer Kraft und einer Geschwindigkeit des Dämpfers. Durch Integration der Leistung über die Zeit ergibt sich daraus die Energie. Soll die zu rekuperierende Energie in einem einheitlichen Zeitintervall möglichst hoch sein, muss entweder die Kraft oder die Geschwindigkeit des Dämpfers hoch sein, wobei jedoch nur die Kraft des Dämpfers direkt beeinflusst werden kann.

Ein Verfahren zum Betreiben eines Kraftfahrzeugs ist aus der Druckschrift DE 10 2009 036 731 A1 bekannt. Darin ist dargelegt, dass elektrische Energie, die über eine Dämpfung eines Rads rekuperiert wird, großen Schwankungen und hohen Spitzenwerten unterliegt. Daher ist für jedes Rad des Kraftfahrzeugs ein Aktuator mit einer Leistungselektronik und einem Kurzzeitspeicher vorgesehen, mit der Relativbewegungen des Rads aufgrund von Fahrbahnunebenheiten in elektrische Energie umgewandelt werden können.

Eine elektrisch verstellbare Regelung für einen Dämpfer ist aus der Druckschrift DE 101 20 918 B4 bekannt. Hierbei wird eine Stellung des Dämpfers für einen höchstmöglichen Komfort an die konkrete Fahrsituation angepasst, wobei die konkrete Fahrsituation beispielsweise aus Sensoren, die Straßenunebenheiten ermitteln, festgelegt wird.

Die Druckschrift DE 10 2010 052 964 A1 zeigt ein Verfahren zum Betreiben eines Schub- und/oder Bremssystems eines Kraftfahrzeugs, wobei mit diesem Schub- und/oder Bremssystem Energie über einen fahrzeuginternen Energiespeicher in Abhängigkeit von einer Detektionseinrichtung, die Objekte in einer Umgebung des Kraftfahrzeugs erfasst, rekuperiert wird.

Weiterhin sind aus den Druckschriften US 2009/0260935 A1 und WO 2011/159874 A2 rekuperierende Dämpfersysteme bekannt.

Ein System zur Erzeugung einer Dämpfungskraft als Teil eines Radaufhängungssystems eines Kraftfahrzeugs ist aus der Druckschrift US 2009/0079145 A1 bekannt. Dabei umfasst das System eine erste Einrichtung, die einen elektromagnetischen Motor aufweist, und zur Erzeugung einer ersten Dämpfungskraft ausgebildet ist. Außerdem umfasst das System eine zweite Vorrichtung zum Erzeugen einer zweiten Dämpfungskraft, die von einer Wirkung einer Flüssigkeit abhängt, wenn eine Geschwindigkeit einer Hubbewegung einer Geschwindigkeit entspricht, bei welcher eine elektrisch antreibende Kraft, die von dem elektromagnetischen Motor erzeugt wird, eine Spannung einer Spannungsquelle übersteigt.

Ein Dämpfungsgerät für ein Kraftfahrzeug ist aus der Druckschrift US 2013/0158799 A1 bekannt. Dabei ist dieses Kraftfahrzeug mit einem Vorausschausensor ausgestattet, der dazu ausgebildet ist, auf einer Straße einen konvexen Bereich zu erkennen, bevor dieser von einem Rad des Kraftfahrzeugs überfahren wird. Beim Überfahren des konvexen Bereichs wird eine Steifigkeit des Dämpfungsgeräts, bspw. einer Feder, an den konvexen Bereich angepasst, wodurch ein Fahrkomfort zu erhöhen ist.

In der Druckschrift US 8 840 118 B1 ist ein aktives Aufhängesystem beschrieben, das einen hydraulischen Aktuator, eine hydraulische Motorpumpe, einen Elektromotor, der mit der hydraulischen Motorpumpe gekoppelt ist, einen Sensor zum Erfassen eines Zustands eines Rads sowie ein Kontrollgerät zur Kontrolle der voranstehenden Komponenten aufweist. Dabei wird von dem Elektromotor nur dann elektrische Energie gewandelt, wenn der hydraulische Aktuator aktiv bewegt wird.

Vor diesem Hintergrund werden ein Verfahren und ein System mit den Merkmalen der unabhängigen Patentansprüche vorgestellt. Ausgestaltungen des Verfahrens und des Systems gehen aus den jeweiligen abhängigen Patentansprüchen hervor.

Das erfindungsgemäße Verfahren ist zum Betreiben eines Radaufhängungssystems eines Kraftfahrzeugs, das einen Dämpfer, über den ein Rad des Kraftfahrzeugs mit einem Fahrgestell des Kraftfahrzeugs verbunden ist, und eine dem Dämpfer zugeordnete elektrische Maschine aufweist, vorgesehen. Bei dem Verfahren wird mit mindestens einem Sensor zum vorausschauenden Erfassen eines Umfelds des Kraftfahrzeugs ein von dem Kraftfahrzeug zukünftig zu befahrender Untergrund erfasst, wobei der zukünftig zu befahrende Untergrund auf das Vorliegen von Hindernissen untersucht wird, wobei eine Unebenheit des Untergrunds als Hindernis identifiziert wird, wenn ein Wert mindestens einer Abmessung der Unebenheit um einen Toleranzwert von einem Schwellwert abweicht. Außerdem wird für das identifizierte Hindernis ein Wert für eine Menge an elektrischer Energie prognostiziert bzw. vorausschauend ermittelt, die von der als Generator betriebenen elektrischen Maschine aus mechanischer Energie umgewandelt wird, wenn für den Dämpfer bei Befahren des identifizierten Hindernisses ein Dämpfungsgrad mit einem bestimmten, festzulegenden Rekuperationswert eingestellt wird. Für das identifizierte Hindernis wird weiterhin ein Wert für einen Fahrkomfort prognostiziert bzw. vorausschauend ermittelt, der sich ergibt, wenn für den Dämpfer bei zukünftigem Befahren des identifizierten Hindernisses der Dämpfungsgrad mit dem Rekuperationswert eingestellt wird. Ferner wird ein Wert für ein Entscheidungskriterium ermittelt, der einerseits von dem Wert für die Menge an aus mechanischer Energie umgewandelter elektrischer Energie und andererseits von dem Wert für den Fahrkomfort bei dem eingestellten Rekuperationswert für den Dämpfungsgrad des Dämpfers abhängig ist. Das identifizierte Hindernis wird nur dann mit dem eingestellten Rekuperationswert für den Dämpfungsgrad des Dämpfers überfahren bzw. befahren, wenn der Wert für das Entscheidungskriterium einen hierfür vorgesehenen Sollwert aufweist.

Hierbei können für das Entscheidungskriterium bspw. zwei Werte möglich sein. Diese beiden Werte sind in Ausgestaltung, bspw. wie Zustandswerte, entweder als 0 und 1 definierbar, wobei 1 dem Sollwert entspricht, wohingegen 0 nicht dem Sollwert bzw. einem negativen Sollwert entspricht. Bei Vorliegen eines ersten Werts z. B. 1, der dem vorgesehenen Sollwert entspricht, wird bei dem Überfahren des Hindernisses für den Dämpfungsgrad des Dämpfers der Rekuperationswert eingestellt und die elektrische Maschine als Generator betrieben. Bei Vorliegen eines zweiten möglichen Werts, z. B. 0, für das Entscheidungskriterium ist auf diese Maßnahme zu verzichten.

Der Dämpfer wird bei eingestelltem Rekuperationswert für den Dämpfungsgrad härter eingestellt als bei Befahren eines ebenen Untergrunds, bei dem für den Dämpfungsgrad üblicherweise ein Komfortwert eingestellt und/oder vorgesehen wird, wobei der Rekuperationswert größer als der Komfortwert ist.

Nach Überfahren des Hindernisses wird der Dämpfungsgrad von dem Rekuperationswert wieder auf den Komfortwert reduziert.

Eine mechanische Leistung des Dämpfers wird aus einem Quadrat einer Geschwindigkeit des Dämpfers multipliziert mit dem Rekuperationswert für den Dämpfungsgrad prognostiziert bzw. vorausschauend ermittelt. Der Wert für die Menge an zu gewinnender bzw. zu rekuperierender elektrischer Energie wird durch Integration der Leistung über die Zeit, während der das Hindernis zu befahren ist, ermittelt.

In Ausgestaltung des Verfahrens wird mit dem Sensor ein zukünftig zu befahrender Bereich des Untergrunds erfasst und eine Bezugsebene definiert, deren Niveau einem Mittelwert einer Höhe von Punkten entlang des mindestens einen Bereichs entspricht.

Weiterhin wird als die mindestens eine Abmessung für die Unebenheit eine Abweichung der Unebenheit von dem Niveau der Bezugsebene ermittelt. Diese mindestens eine Abweichung kann auch als Abweichung in vertikaler Richtung definiert werden. Durch Definition der Bezugsebene kann berücksichtigt werden, ob mit dem Kraftfahrzeug eine Steigung oder ein Gefälle befahren wird. Eine Richtung der mindestens einen Abweichung ist üblicherweise parallel zu einer Normalkraft, mit der das Kraftfahrzeug auf den Untergrund wirkt, orientiert.

Ergänzend kann als die mindestens eine Abmessung für die Unebenheit eine Änderung der Abweichung der Unebenheit von dem Niveau der Bezugsebene in einer Richtung, die parallel zu der Bezugsebene ist, ermittelt werden. Eine derartige Änderung der Abweichung kann auch als Gradient der Abweichung bezeichnet werden und üblicherweise in Fahrtrichtung des Kraftfahrzeugs als vorgesehene Richtung definiert sein.

Alternativ oder ergänzend wird als die mindestens eine Abmessung für die Unebenheit eine Länge der Unebenheit in einer Richtung, bspw. der Fahrtrichtung, die parallel zu der Bezugsebene ist, ermittelt.

Zudem ist es auch möglich, dass als die mindestens eine Abmessung für die Unebenheit eine Frequenz einer sich periodisch wiederholenden Form der Unebenheit in einer Richtung, bzw. der Fahrtrichtung, die parallel zu der Bezugsebene ist, ermittelt wird.

Ein Fahrwerk des Kraftfahrzeugs umfasst sämtliche Radaufhängungssysteme des Kraftfahrzeugs, wobei jeweils ein Rad mit einem für dieses Rad vorgesehenen Radaufhängungssystem mit dem Fahrgestell verbunden ist. Ein Radaufhängungssystem umfasst u. a. neben dem üblicherweise als Schwingungsdämpfer ausgebildeten Dämpfer eine Feder und eine Radaufhängung. Ein aktives Fahrwerk kann ein Kontrollgerät aufweisen, mit dem eine Funktion eines jeweiligen Radaufhängungssystems aktiv zu kontrollieren ist.

In einer Ausgestaltung des Verfahrens wird der Wert für die Menge an Energie, die bei Überfahren des Hindernisses gewonnen werden kann, anhand von mindestens einem Simulationsmodell, das für das Radaufhängungssystem verwendet wird, prognostiziert. Mit diesem mindestens einen Simulationsmodell wird für das Radaufhängungssystem dessen Verhalten bei dem zukünftig zu befahrenden Hindernis prognostiziert, wenn für den Dämpfungsgrad des Dämpfers der vorgesehene Rekuperationswert eingestellt wird.

Zur Quantifizierung der Werte bzw. Maße für den Fahrkomfort, die Menge an prognostizierter Energie, die ein Rekuperationspotential angibt, und das Entscheidungskriterium werden in Ausgestaltung als Simulationsmodelle zwei sog. Viertelfahrzeugmodelle simuliert, die in einem einstellbaren Abstand vor dem realen Kraftfahrzeug über die detektierten Unebenheiten fahren. Dabei ist für jedes Radaufhängungssystem, über das ein Rad mit dem Fahrgestell verbunden ist, ein dem Radaufhängungssystem zugeordnetes Viertelfahrzeugmodell als Simulationsmodell vorgesehen. Somit ist ein zukünftiges Verhalten des jeweiligen Radaufhängungssystems beim zukünftigen Überfahren des Untergrunds mit dem Rad für das jeweilige Radaufhängungssystem individuell zu simulieren. Auf Grundlage einer derartigen Simulation mit dem Simulationsmodell bzw. Viertelfahrzeugmodell wird weiterhin die durch das jeweilige Radaufhängungssystem zu rekuperierende Menge an elektrischer Energie beim zukünftigen Befahren des Untergrunds prognostiziert.

Ein hierbei bereitgestelltes erstes Simulationsmodell weist dabei eine geringe Dämpfung auf, wobei eine simulierte Aufbaubeschleunigung als Wert für den Fahrkomfort herangezogen wird. Ein geringer Wert steht dabei für einen hohen Fahrkomfort, weshalb ein reziproker Wert verwendet werden kann. Ein zweites Simulationsmodell weist dagegen eine hohe Dämpfung auf, wobei der Wert für die Menge an prognostizierter Energie für das Rekuperationspotential anhand eines Produkts aus dem Dämpfungsgrad für eine Dämpfkraft und einer relativen Geschwindigkeit zwischen dem Fahrgestell bzw. einem Aufbau des Kraftfahrzeugs und dem jeweiligen Rad abgeschätzt wird. Ein hoher Wert steht hier für ein hohes Rekuperationspotential.

In beiden Fällen bietet sich eine Ermittlung eines effektiven Werts für den Fahrkomfort in einem gleitenden Fenster an, wobei eine Breite des Fensters in Sekunden über eine Geschwindigkeit des Kraftfahrzeugs und einer gewählten Vorausschaulänge für den zu befahrenden Untergrund berechnet wird. Eine Normierung effektiver Werte ist vorab in der Simulation mit den beiden Simulationsmodellen durchführbar, indem mit ausgewählten Unebenheiten eine Abschätzung für einen ungünstigen oder günstigen Fall durchgeführt wird.

Das erfindungsgemäße System ist zum Betreiben eines beschriebenen Radaufhängungssystems ausgebildet und umfasst als Komponenten den mindestens einen Sensor zum Erfassen eines Umfelds des Kraftfahrzeugs und ein Kontrollgerät. Mit den Komponenten des Systems ist eine Ausführungsform des voranstehend beschriebenen Verfahrens durchzuführen. Dabei sind von dem Kontrollgerät Werte für die Menge an rekuperierbarer Energie und für den Fahrkomfort bspw. durch Schätzen und/oder Berechnen zu ermitteln. Außerdem ist mit dem Kontrollgerät eine Bedingung für das Entscheidungskriterium zu prüfen und für den Dämpfer beim Überfahren des identifizierten Hindernisses der Rekuperationswert einzustellen, wenn das Entscheidungskriterium den Sollwert aufweist.

Der mindestens eine Sensor ist an einer Außenwandung des Kraftfahrzeugs angeordnet, wobei ein Erfassungsbereich des mindestens einen Sensors in Fahrtrichtung des Kraftfahrzeugs orientiert bzw. zu orientieren ist.

Außerdem ist der mindestens eine Sensor dazu ausgebildet, die Umgebung des Kraftfahrzeugs auf Grundlage von elektromagnetischen oder akustischen Wellen zu erfassen, die von dem mindestens einen Sensor auszusenden, von mindestens einem Objekt in der Umgebung des Kraftfahrzeugs zu reflektieren und von dem mindestens einen Sensor wieder zu empfangen sind. Demnach kann der mindestens eine Sensor als Kamera, Radar-Sensor, Lidar-Sensor oder als Ultraschall-Sensor ausgebildet sein.

Mit einer Vorausschau- bzw. Preview-Sensorik, die den mindestens einen Sensor, der bspw. als Kamera ausgebildet ist, umfasst, kann ein Höhenprofil einer Oberfläche des von dem Kraftfahrzeug zu befahrenden Untergrunds, üblicherweise einer Straße, ermittelt und aus einer Form, üblicherweise der mindestens einen Abmessung des Hindernisses entlang der Oberfläche abgeleitet werden, ob ein Potential für eine Rekuperation für das Hindernis hoch ist. Dabei kann eine Rekuperation gezielt nur für große Hindernisse durchgeführt werden, bei denen ein Komfortverlust aufgrund einer hohen Energierückgewinnung gerechtfertigt ist. Ist aufgrund des Höhenprofils der Oberfläche nur wenig Energie zu rekuperieren, werden Maßnahmen zur Energierückgewinnung gar nicht erst eingeleitet, so dass der Fahrkomfort nicht beeinträchtigt wird. Hierdurch kann hinsichtlich einer Abwägung darüber, ob für ein zu überfahrendes Hindernis eine Energierückgewinnung durchzuführen oder ein hoher Fahrkomfort vorzuziehen ist, eine eindeutige Entscheidung getroffen werden.

Bei einer Ausführungsform des Verfahrens wird das durch die Vorausschau-Sensorik erkannte Höhenprofil des Untergrunds auf Unebenheiten untersucht, die zur Energierückgewinnung sehr günstig sind. Beispielsweise können gezielt Unebenheiten ausgewählt werden, deren Abweichung bzw. Amplitude mindestens einen Schwellwert von x cm, z. B. 2 cm, aufweist. Alternativ oder ergänzend ist für einen Abschnitt des Höhenprofils der Oberfläche eine Frequenzanalyse durchführbar, wodurch Unebenheiten in einem speziellen Bereich einer Frequenz zum Beschreiben des Höhenprofils, z. B. von 1 Hz bis 4 Hz, auszuwählen sind. Dies ist bspw. für einen Untergrund möglich, dessen Höhenprofil entlang einer Strecke eine sich periodisch wiederholende Form aufweist, wobei aus einer Periode der sich wiederholenden Form und ggf. unter Berücksichtigung einer Geschwindigkeit des Kraftfahrzeugs die Frequenz abgeleitet werden kann. So weist u. a. Kopfsteinpflaster als möglicher Untergrund eine derartige, sich periodisch wiederholende Form auf.

Eine weitere Möglichkeit zur Umsetzung des Verfahrens besteht darin, Gradienten, die eine Änderung eines Verlaufs des Höhenprofils beschreiben und deren Werte jeweils mindestens um einen Toleranzwert von einem Schwellwert abweichen, entlang des Höhenprofils zu suchen, weil dort für einen Dämpfer eine hohe Geschwindigkeit zu erwarten ist.

Die im Rahmen des Verfahrens zu berücksichtigenden genannten Kriterien sind in beliebiger Weise kombinierbar, wobei entlang des Höhenprofils geeignete Unebenheiten ausgewählt und ggf. als Hindernisse identifiziert werden können. Kurz bevor ein identifiziertes Hindernis auf die vorausfahrenden, als Vorderräder ausgebildeten Räder trifft, wird der Dämpfungsgrad eines dem jeweiligen Rad zugeordneten Dämpfers durch Vorsehen des Rekuperationswerts auf einen applizierbaren Wert, z. B. einen Maximalwert für eine bestmögliche Energierückgewinnung, angehoben. Kurz nachdem die als Hinterräder ausgebildeten Räder die ausgewählte Unebenheit passiert bzw. überfahren haben, wird die Dämpfung wieder auf einen normalen Wert abgesenkt.

Insgesamt kann mit dem vorgestellten Verfahren sowie mit dem vorgestellten System für ein Kraftfahrzeug, das ein rekuperationsfähiges Fahrgestell aufweist, durch vorausschauende Analyse des Höhenprofils des befahrenen Untergrunds darüber abgewägt werden, ob entlang des Untergrunds eine Rekuperation durchgeführt werden kann oder ob darauf verzichtet werden soll, um einen hohen Fahrkomfort beizubehalten.

Um bei einer Rekuperation möglichst viel mechanische in elektrische Energie umzuwandeln, sind die Dämpfer bei großen Hindernissen mit dem Rekuperationswert extrem hart einzustellen, was jedoch zu starken Komforteinbußen führen kann. Bei kleineren Hindernissen, wie beispielsweise einem Kanaldeckel oder einem Flickenteppich aus Teer, kann über die Rekuperation deutlich weniger elektrische Energie erzeugt werden, wobei jedoch ein Komfortverlust ebenfalls hoch ist. Nur durch eine weiche Dämpfung kann ein hoher Fahrkomfort erreicht werden, wodurch allerdings das Potential für die Rekuperation wieder sinkt. Mit dem vorgestellten Verfahren wird darüber abgewägt, ob für ein Hindernis eine Rekuperation durchgeführt werden soll oder nicht. Somit ist nicht erforderlich, zugunsten des Komforts auf eine hohe Rekuperation zu verzichten oder das Fahrgestell des Kraftfahrzeugs unkomfortabel einzustellen, falls die Energierückgewinnung im Vordergrund stehen sollte.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.
Figur 1 zeigt in schematischer Darstellung ein Kraftfahrzeug, das mit einer Ausführungsform des erfindungsgemäßen Systems ausgestattet ist und einen Untergrund befährt, wobei eine Ausführungsform des erfindungsgemäßen Verfahrens ausgeführt wird.
Figur 2 zeigt in schematischer Darstellung ein Detail der Ausführungsform des Systems aus Figur 1.

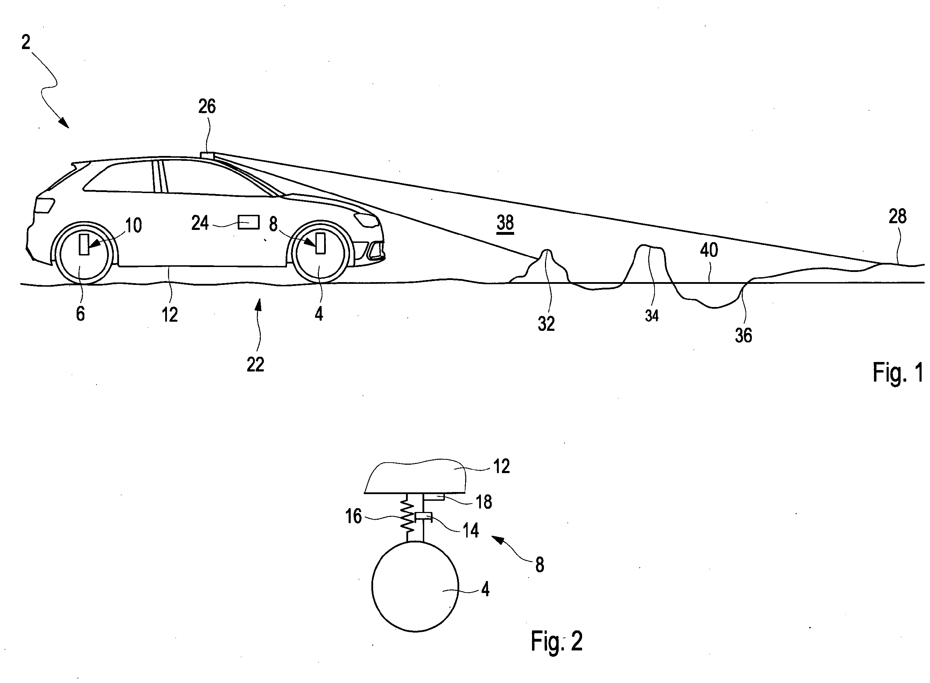

Das in Figur 1 dargestellte Kraftfahrzeug 2 umfasst vier Räder 4, 6, von denen hier jedoch nur ein erstes, als Vorderrad ausgebildetes Rad 4 und ein zweites, als Hinterrad ausgebildetes Rad 6 dargestellt sind. Jedes Rad 4, 6 ist über ein Radaufhängungssystem 8, 10 mit einem Fahrgestell 12 des Kraftfahrzeugs 2 verbunden.

Ein Detail des Radaufhängungssystems 8 des ersten Rads 4 ist in Figur 2 dargestellt. Hierbei ist vorgesehen, dass sämtliche Radaufhängungssysteme 8, 10 sämtlicher Räder 4, 6 dieselben Komponenten aufweisen. So umfasst jeweils ein Radaufhängungssystem 8 als erste Komponente einen Dämpfer 14 und eine Feder 16. Als weitere Komponente des jeweiligen Radaufhängungssystems 8 ist hier dem Dämpfer 14 eine elektrische Maschine 18 als Aktuator zugeordnet. Die elektrische Maschine 18 kann entweder als Motor, wobei elektrische Energie in mechanische Energie umzuwandeln ist, oder als Generator, wobei mechanische Energie in elektrische Energie umzuwandeln und somit zu rekuperieren ist, verwendet werden.

Sofern die elektrische Maschine 18 als Motor bzw. motorisch betrieben wird, ist der der elektrischen Maschine 18 zugeordnete Dämpfer 14 von der elektrischen Maschine 18 mechanisch zu beaufschlagen und somit anzuregen. Falls die elektrische Maschine 18 dagegen als Generator betrieben wird, wird sie durch eine Bewegung des zugeordneten Dämpfers 14 mechanisch beaufschlagt, wodurch mechanische Energie, die von dem Dämpfer 14 bei dessen Bewegung erzeugt wird, von der elektrischen Maschine 18 in einem generatorischen Betrieb in elektrische Energie umgewandelt wird.

Diesbezüglich ist auch ein Dämpfungsgrad des Dämpfers 14 zu variieren, wobei der Dämpfer 14 umso härter eingestellt ist, je höher der Dämpfungsgrad ist. Falls der Dämpfungsgrad größer als ein hierfür zuvor zu definierender Schwellwert ist und somit einen Rekuperationswert aufweist und die als Generator betriebene elektrische Maschine 18 von dem somit hart eingestellten Dämpfer 14 beaufschlagt wird, wird von der elektrischen Maschine 18 mechanische Energie des Dämpfers 14 in elektrische Energie umgewandelt.

Die vorgestellte Ausführungsform des Systems 22 umfasst ein Kontrollgerät 24, mit dem mindestens ein Schritt einer Ausführungsform eines erfindungsgemäßen Verfahrens zu kontrollieren und somit zu steuern und/oder zu regeln ist, sowie mindestens einen Sensor 26 zum Erfassen und somit zum Erkennen und/oder Orten einer Umgebung des Kraftfahrzeugs 2, wobei dieser Sensor 26 hier an einer Außenwandung des Kraftfahrzeugs 2 angeordnet ist. Dabei wird die Umgebung von dem Sensor 26 auf Grundlage elektromagnetischer oder akustischer Wellen, die von dem Sensor 26 ausgesandt, von Objekten in der Umgebung reflektiert und von dem Sensor 26 empfangen werden, berührungslos erfasst. Ein derartiger Sensor kann als Kamera für elektromagnetische Wellen im sichtbaren Bereich, aber auch als Radar- oder Lidar-Sensor ausgebildet sein. Ein Sensor 26, der die Umgebung auf Basis akustischer Wellen erfasst, ist in der Regel als Ultraschall-Sensor ausgebildet.

Sämtliche Radaufhängungssysteme 8, 10 sämtlicher Räder 4, 6 und somit sämtliche Dämpfer 14, Federn 16 und elektrische Maschinen 18 sind je nach Definition hier als Komponenten der hier vorgestellten Ausführungsform des erfindungsgemäßen Systems 22 ausgebildet.

Sämtliche vorgestellten Komponenten der Ausführungsform des Systems 22 können auch zur Durchführung anderer Funktionen des Kraftfahrzeugs 2 unabhängig von der vorgesehenen Ausführungsform des Verfahrens verwendet werden.

Weiterhin ist hier vorgesehen, dass das Kraftfahrzeug 2 in einer anhand von Figur 1 dargestellten Situation einen Untergrund 28 mit einem Höhenprofil, das mehrere Unebenheiten aufweist, befährt. Drei dieser Unebenheiten werden hier aufgrund ihrer jeweiligen Abmessung und/oder Größe auch als Hindernisse 32, 34, 36 definiert bzw. bezeichnet. Das Kraftfahrzeug 2 fährt in der hier beschriebenen Situation auf die hier als Hindernisse 32, 34, 36 einzustufenden Unebenheiten entlang des Höhenprofils des Untergrunds 28 zu.

Bei Durchführung der Ausführungsform des Verfahrens wird die Umgebung und somit u. a. der Untergrund 28 innerhalb eines Erfassungsbereichs 38 des Sensors 26, wobei der Erfassungsbereich 38 in Fahrtrichtung des Kraftfahrzeugs 2 vorausschauend nach vorne orientiert ist, erfasst.

Außerdem wird das Höhenprofil des Untergrunds 28 von dem Kontrollgerät 24 analysiert, wobei auch Unebenheiten erkannt und/oder identifiziert und in der vorliegenden Situation als Hindernisse 32, 34, 36 eingestuft bzw. klassifiziert werden, die bei der Ausführungsform des Verfahrens relevant sind. Hierzu wird das Höhenprofil des Untergrunds 28 ausgemessen, wobei örtliche Änderungen eines Verlaufs von Punkten auf einer Oberfläche des Untergrunds 28 zur Bereitstellung des Höhenprofils ermittelt werden. Dabei wird in der vorgestellten Ausführungsform für mindestens einen Bereich des Untergrunds 28 eine Bezugsebene 40 definiert, die bspw. parallel zu dem Fahrgestell 12 des Kraftfahrzeugs 2 angeordnet sowie alternativ oder ergänzend bzgl. ihrer Höhe einem Mittelwert einer Höhe von Punkten entlang des mindestens einen Bereichs entsprechen kann.

Eine mögliche Unebenheit des Höhenprofils des Untergrunds 28 wird als Hindernis 32, 34, 36 erkannt und/oder eingestuft, wenn sich der Verlauf des Höhenprofils des Untergrunds 28 in einer Richtung, bspw. in einer vorgesehenen Fahrtrichtung des Kraftfahrzeugs 2, relativ zu der Bezugsebene 40 an einer Stelle des Untergrunds um einen Wert ändert, der mindestens so groß wie ein hierfür zu definierender Schwellwert ist. Hierbei kann der Verlauf des Höhenprofils in Bezug auf eine Gerade als Abszisse, die gemäß der vorgesehenen Richtung orientiert ist und durch die Bezugsebene 40 verläuft, als eine Kurve, die entlang einer Ordinate, die senkrecht zu der Geraden bzw. Abszisse aufzutragen ist, definiert sein, wobei eine erste Ableitung dieser Kurve einer Änderung des Verlaufs entspricht. Ein Wert der Ableitung und somit der Wert der Änderung wird mit dem hierfür zu definierenden Schwellwert verglichen. In der vorliegenden Ausführungsform werden ein erstes und ein zweites Hindernis 32, 34 als Erhebungen und ein drittes Hindernis 36 als Absenkung eingestuft.

Weiterhin ist mit dem Kontrollgerät 24 für jedes Hindernis 32, 34, 36 zu ermitteln, wieviel Energie von der, dem jeweiligen Dämpfer 14 zugeordneten elektrischen Maschine 18 bei einem bestimmten Rekuperationswert für den Dämpfungsgrad, der für den Dämpfer 14 einzustellen ist, bei einem Betrieb der elektrischen Maschine 18 als Generator gewonnen werden kann. Hierbei ist ein Wert einer eventuell zu gewinnenden Menge an Energie von der Abmessung des jeweiligen Hindernisses 32, 34, 36 sowie von dem einzustellenden Dämpfungsgrad abhängig, wenn ein Rad 4 das Hindernis 32, 34, 36 über- und/oder befährt. Außerdem ist ein Wert für einen Fahrkomfort des Kraftfahrzeugs zu ermitteln, der sich ergibt, wenn das Hindernis 32, 34, 36 von dem Rad 4 bei erhöht eingestelltem Rekuperationswert für den Dämpfungsgrad überfahren wird, wobei der Wert für den Fahrkomfort ebenfalls von der Abmessung des Hindernisses 32, 34, 36 sowie dem Rekuperationswert für den Dämpfungsgrad abhängig ist. Eine Entscheidung darüber, ob das Hindernis 32, 34, 36 bei dem erhöhten Dämpfungsgrad überfahren und somit durch die elektrische Maschine 18 elektrische Energie gewonnen werden kann, kann anhand eines zu berechnenden Werts eines Entscheidungskriteriums getroffen werden, wobei der Wert des Entscheidungskriteriums einerseits von dem Wert des Fahrkomforts und andererseits von dem Wert der elektrischen Energie, die bei Überfahren des Hindernisses 32, 34, 36 gewonnen werden kann, abhängig ist. In der Regel ist der Fahrkomfort umso geringer, je höher der Dämpfungsgrad und/oder die zu gewinnende Menge an elektrischer Energie ist. Umgekehrt ist der Fahrkomfort umso höher, je niedriger der Dämpfungsgrad und/oder die zu gewinnende Menge an elektrischer Energie ist.

Je nach Definition des Entscheidungskriteriums kann ein Hindernis 32, 34, 36 mit einem erhöhten Wert und somit dem Rekuperationswert für den Dämpfungsgrad des Dämpfers 14 überfahren werden, wenn der Wert des Entscheidungskriteriums einem hierfür zu definierenden Sollwert entspricht. Dabei kann der Sollwert für das Entscheidungskriterium von einer Person, die das Kraftfahrzeug 2 fährt, individuell eingestellt werden. Durch Vorsehen des Entscheidungskriteriums unter Berücksichtigung des hierfür individuell einstellbaren Sollwerts ist somit zwischen dem Fahrkomfort einerseits und der zu gewinnenden Menge an elektrischer Energie andererseits abzuwägen.

## Patentansprüche

1. Verfahren zum Betreiben eines Radaufhängungssystems (8, 10) eines Kraftfahrzeugs (2), das einen Dämpfer (14), über den ein Rad (2) mit einem Fahrgestell (12) des Kraftfahrzeugs (2) verbunden ist, und eine dem Dämpfer (14) zugeordnete elektrische Maschine (18) aufweist, wobei mit mindestens einem Sensor (26) zum Erfassen eines Umfelds des Kraftfahrzeugs (2) ein von dem Kraftfahrzeug (2) zukünftig zu befahrender Untergrund (28) erfasst wird, wobei der zukünftig zu befahrende Untergrund (28) auf das Vorliegen von Hindernissen (32, 34, 36) untersucht wird, wobei eine Unebenheit des Untergrunds als Hindernis (32, 34, 36) identifiziert wird, wenn ein Wert mindestens einer Abmessung der Unebenheit um einen Toleranzwert von einem Schwellwert abweicht,
**dadurch gekennzeichnet, dass**
für das identifizierte Hindernis (32, 34, 36) ein Wert für eine Menge an elektrischer Energie prognostiziert wird, die von der als Generator betriebenen elektrischen Maschine (18) aus mechanischer Energie umgewandelt wird, wenn für den Dämpfer (14) bei Befahren des identifizierten Hindernisses (32, 34, 36) ein Dämpfungsgrad mit einem bestimmten Rekuperationswert eingestellt wird, wobei für das identifizierte Hindernis (32, 34, 36) ein Wert für einen Fahrkomfort prognostiziert wird, der sich ergibt, wenn für den Dämpfer (14) bei Befahren des identifizierten Hindernisses (32, 34, 36) der Dämpfungsgrad mit dem Rekuperationswert eingestellt wird, wobei ein Wert für ein Entscheidungskriterium ermittelt wird, der von dem Wert für die Menge an aus mechanischer Energie umgewandelter elektrischer Energie und von dem Wert für den Fahrkomfort bei dem eingestellten Rekuperationswert für den Dämpfungsgrad des Dämpfers (14) abhängig ist, wobei das identifizierte Hindernis (32, 34, 36) mit dem eingestellten Rekuperationswert für den Dämpfungsgrad des Dämpfers (14) überfahren wird, wenn der Wert für das Entscheidungskriterium einen hierfür vorgesehenen Sollwert aufweist.

2. Verfahren nach Anspruch 1, bei dem der Dämpfer (14) bei eingestelltem Rekuperationswert für den Dämpfungsgrad härter als bei Befahren eines ebenen Untergrunds (28), bei dem für den Dämpfungsgrad ein Komfortwert eingestellt wird, eingestellt wird.

3. Verfahren nach Anspruch 2, bei dem der Dämpfungsgrad nach Überfahren des Hindernisses (32, 34, 36) von dem Rekuperationswert auf den Komfortwert reduziert wird.

4. Verfahren nach einem der voranstehenden, Ansprüche, bei dem eine mechanische Leistung des Dämpfers (14) aus einem Quadrat einer Geschwindigkeit des Dämpfers (14) multipliziert mit dem Rekuperationswert für den Dämpfungsgrad prognostiziert wird, und wobei der Wert für die Menge an elektrischer Energie durch Integration der Leistung über die Zeit, während der das Hindernis (32, 34, 36) zu befahren ist, ermittelt wird.

5. Verfahren nach einem der voranstehenden Ansprüche, bei dem mit dem mindestens einen Sensor (26) ein zukünftig zu befahrender Bereich des Untergrunds (28) erfasst und eine Bezugsebene (40) definiert wird, deren Niveau einem Mittelwert einer Höhe von Punkten entlang des mindestens einen Bereichs entspricht.

6. Verfahren nach Anspruch 5, bei dem als die mindestens eine Abmessung für die Unebenheit eine Abweichung der Unebenheit von dem Niveau der Bezugsebene (40) ermittelt wird.

7. Verfahren nach Anspruch 6, bei dem als die mindestens eine Abmessung für die Unebenheit eine Änderung der Abweichung der Unebenheit von dem Niveau der Bezugsebene (40) in einer Richtung, die parallel zu der Bezugsebene (40) ist, ermittelt wird.

8. Verfahren nach einem der Ansprüche 5 bis 7, bei dem als die mindestens eine Abmessung für die Unebenheit eine Länge der Unebenheit (40) in einer Richtung, die parallel zu der Bezugsebene (40) ist, ermittelt wird.

9. Verfahren nach einem der Ansprüche 5 bis 8, bei dem als die mindestens eine Abmessung für die Unebenheit eine Frequenz einer sich periodisch wiederholenden Form der Unebenheit in einer Richtung, die parallel zu der Bezugsebene (40) ist, ermittelt wird.

10. Verfahren nach einem der voranstehenden Ansprüche, bei dem für das Radaufhängungssystem (28) mindestens ein Simulationsmodell verwendet wird, mit dem der Wert der Menge an umwandelbarer elektrischer Energie bei einem Befahren des Untergrunds (28) prognostiziert wird.

11. System zum Betreiben eines Radaufhängungssystems (8, 10) eines Kraftfahrzeugs (2), das einen Dämpfer (14), über den ein Rad (4, 6) mit einem Fahrgestell (12) des Kraftfahrzeugs (2) verbunden ist, und eine dem Dämpfer (14) zugeordnete elektrische Maschine (18) aufweist, wobei das System (22) mindestens einen Sensor (26) zum Erfassen eines Umfelds des Kraftfahrzeugs und ein Kontrollgerät (24) aufweist, wobei der mindestens eine Sensor (26) dazu ausgebildet ist, einen von dem Kraftfahrzeug (2) zukünftig zu befahrenden Untergrund (28) zu erfassen, wobei das Kontrollgerät (24) dazu ausgebildet ist, den zukünftig zu befahrenden Untergrund (28) auf das Vorliegen von Hindernissen (32, 34, 36) zu untersuchen, wobei eine Unebenheit des Untergrunds (28) als Hindernis (32, 34, 36) zu identifizieren ist, wenn ein Wert mindestens einer Abmessung der Unebenheit um einen Toleranzwert von einem Schwellwert abweicht,
**dadurch gekennzeichnet, dass**
das Kontrollgerät (24) dazu ausgebildet ist, für das identifizierte Hindernis (32, 34, 36) einen Wert für eine Menge an elektrischer Energie zu prognostizieren, die von der als Generator betriebenen elektrischen Maschine (18) aus mechanischer Energie umzuwandeln ist, wenn für den Dämpfer (14) bei Befahren des identifizierten Hindernisses (32, 34, 36) ein Dämpfungsgrad mit einem bestimmten Rekuperationswert einzustellen ist, wobei das Kontrollgerät (24) dazu ausgebildet ist, für das identifizierte Hindernis einen Wert für einen Fahrkomfort zu prognostizieren, der sich ergibt, wenn für den Dämpfer bei Befahren des identifizierten Hindernisses der Dämpfungsgrad mit dem Rekuperationswert eingestellt ist, und wobei das Kontrollgerät (24) dazu ausgebildet ist, einen Wert für ein Entscheidungskriterium zu ermitteln, der von dem Wert für die Menge an aus mechanischer Energie umgewandelter elektrischer Energie und von dem Wert für den Fahrkomfort bei dem eingestellten Rekuperationswert für den Dämpfungsgrad des Dämpfers (14) abhängig ist, und zu veranlassen, dass das identifizierte Hindernis (32, 34, 36) mit dem eingestellten Rekuperationswert für den Dämpfungsgrad des Dämpfers (14) zu überfahren ist, wenn der Wert für das Entscheidungskriterium einen hierfür vorgesehenen Sollwert aufweist.

12. System nach Anspruch 11, bei dem der mindestens eine Sensor (26) an einer Außenwandung des Kraftfahrzeugs (2) angeordnet ist, wobei ein Erfassungsbereich (38) des mindestens einen Sensors (26) in Fahrtrichtung des Kraftfahrzeugs (2) orientiert ist.

13. System nach Anspruch 11 oder 12, bei dem der mindestens eine Sensor (26) dazu ausgebildet ist, die Umgebung des Kraftfahrzeugs (2) auf Grundlage von Wellen zu erfassen, die von dem mindestens einen Sensor (26) auszusenden, von mindestens einem Objekt in der Umgebung des Kraftfahrzeugs (2) zu reflektieren und von dem mindestens einen Sensor (26) wieder zu empfangen sind.

## Claims

1. Method for operating a wheel suspension system (8, 10) of a motor vehicle (2) which has a damper (14) by means of which a wheel (2) is connected to a chassis (12) of the motor vehicle (2) and an electrical machine (18) which is associated with the damper (14), wherein with at least one sensor (26) for detecting an environment of the motor vehicle (2) a surface (28) on which the motor vehicle (2) is intended to travel in the future is detected, wherein the surface (28) which is intended to be travelled on in the future is examined for the presence of obstacles (32, 34, 36), wherein an unevenness of the surface is identified as an obstacle (32, 34, 36) if a value of at least one dimension of the unevenness deviates from a threshold value by a tolerance value,
**characterised in that**
for the identified obstacle (32, 34, 36) there is predicted a value for a quantity of electrical energy which is converted from mechanical energy by the electrical machine (18) which is operated as a generator when, for the damper (14) when the obstacle (32, 34, 36) which is identified is travelled on, a degree of damping is adjusted with a specific recovery value, wherein there is predicted for the identified obstacle (32, 34, 36) a value for a travel comfort which is produced when, for the damper (14) when the obstacle (32, 34, 36) identified has been travelled on, the degree of damping is adjusted with the recovery value, wherein there is established a value for a decision criterion which is dependent on the value for the quantity of electrical energy converted from mechanical energy and the value for the travel comfort with the adjusted recovery value for the degree of damping of the damper (14), wherein the identified obstacle (32, 34, 36) is travelled over with the adjusted recovery value for the degree of damping of the damper (14) when the value for the decision criterion has a desired value which is provided for this purpose.

2. Method according to claim 1, wherein the damper (14) with an adjusted recovery value for the degree of damping is adjusted to be harder than when travelling on an even surface (28) in which a comfort value is adjusted for the degree of damping.

3. Method according to claim 2, wherein the degree of damping is reduced from the recovery value to the comfort value after travelling over the obstacle (32, 34, 36).

4. Method according to any one of the preceding claims, wherein a mechanical power of the damper (14) is predicted from a square of a speed of the damper (14) multiplied by the recovery value for the degree of damping, and wherein the value for the quantity of electrical energy is established by means of integration of the power over time for which the obstacle (32, 34, 36) is intended to be travelled over.

5. Method according to any one of the preceding claims, wherein with the at least one sensor (26) a region of the surface (28) which is intended to be travelled over in the future is detected and there is defined a reference plane (40) whose level corresponds to a mean value of a height of locations along the at least one region.

6. Method according to claim 5, wherein a deviation of the unevenness from the level of the reference plane (40) is established as the at least one dimension for the unevenness.

7. Method according to claim 6, wherein a change in the deviation of the unevenness from the level of the reference plane (40) in a direction which is parallel with the reference plane (40) is established as the at least one dimension for the unevenness.

8. Method according to any one of claims 5 to 7, wherein a length of the unevenness (40) in a direction which is parallel with the reference plane (40) is established as the at least one dimension for the unevenness.

9. Method according to any one of claims 5 to 8, wherein a frequency of a periodically repeating shape of the unevenness in a direction which is parallel with the reference plane (40) is established as the at least one dimension for the unevenness.

10. Method according to any one of the preceding claims, wherein there is used for the wheel suspension system (28) at least one simulation model by means of which the value of the quantity of electrical energy which can be converted when the surface (28) is travelled on is predicted.

11. System for operating a wheel suspension system (8, 10) of a motor vehicle (2) which has a damper (14) via which a wheel (4, 6) is connected to a chassis (12) of the motor vehicle (2) and an electrical machine (18) which is associated with the damper (14), wherein the system (22) has at least one sensor (26) for detecting an environment of the motor vehicle and a control device (24), wherein the at least one sensor (26) is configured to detect a surface (28) on which the motor vehicle (2) is intended to travel in the future, wherein the control device (24) is configured to examine the surface (28) which is intended to be travelled on in the future for the presence of obstacles (32, 34, 36), wherein an unevenness of the surface (28) must be identified as an obstacle (32, 34, 36) if a value of at least one dimension of the unevenness deviates from a threshold value by a tolerance value,
**characterised in that**
the control device (24) is configured to predict for the identified obstacle (32, 34, 36) a value for a quantity of electrical energy which is intended to be converted by the electrical machine (18) which is operated as a generator from mechanical energy when for the damper (14), when the obstacle (32, 34, 36) which is identified is travelled on, a degree of damping is intended to be adjusted with a specific recovery value, wherein the control device (24) is configured to predict for the identified obstacle a value for a travel comfort which is produced when, for the damper when the obstacle identified has been travelled on, the degree of damping is adjusted with the recovery value, and wherein the control device (24) is configured to establish a value for a decision criterion which is dependent on the value for the quantity of electrical energy converted from mechanical energy and the value for the travel comfort with the adjusted recovery value for the degree of damping of the damper (14), and to cause the identified obstacle (32, 34, 36) to be travelled over with the adjusted recovery value for the degree of damping of the damper (14) when the value for the decision criterion has a desired value which is provided for this purpose.

12. System according to claim 11, wherein the at least one sensor (26) is arranged on an outer wall of the motor vehicle (2), wherein a detection region (38) of the at least one sensor (26) is orientated in the travel direction of the motor vehicle (2).

13. System according to claim 11 or 12, wherein the at least one sensor (26) is configured to detect the environment of the motor vehicle (2) on the basis of waves which are intended to be transmitted by the at least one sensor (26), to be reflected by at least one object in the environment of the motor vehicle (2) and to be received again by the at least one sensor (26).

## Revendications

1. Procédé pour faire fonctionner un système de suspension de roue (8, 10) d'un véhicule automobile (2), qui présente un amortisseur (14) par l'intermédiaire duquel une roue (2) est reliée à un châssis (12) du véhicule automobile (2), et une machine électrique (18) affectée à l'amortisseur (14), dans lequel un sol (28) à parcourir à l'avenir par le véhicule automobile (2) est détecté avec au moins un capteur (26) pour détecter un environnement du véhicule automobile (2), dans lequel la présence d'obstacles (32, 34, 36) est recherchée sur le sol (28) à parcourir à l'avenir, dans lequel une inégalité du sol est identifiée comme obstacle (32, 34, 36) lorsqu'une valeur d'au moins une dimension de l'inégalité dévie d'une valeur de tolérance par rapport à une valeur seuil,
**caractérisé en ce que**
est pronostiquée pour l'obstacle (32, 34, 36) identifié une valeur d'une quantité d'énergie électrique qui est convertie à partir d'énergie mécanique par la machine électrique (18) actionnée comme générateur lorsqu'un facteur d'amortissement avec une valeur de récupération déterminée est réglé pour l'amortisseur (14) lors du passage de l'obstacle (32, 34, 36) identifié, dans lequel est pronostiquée pour l'obstacle (32, 34, 36) identifié une valeur d'un confort de conduite qui est obtenue lorsque le facteur d'amortissement avec la valeur de récupération est réglé pour l'amortisseur (14) lors du passage de l'obstacle (32, 34, 36) identifié, dans lequel est déterminée une valeur d'un critère de décision qui est fonction de la valeur de la quantité d'énergie électrique convertie à partir d'énergie mécanique et de la valeur du confort de conduite avec la valeur de récupération réglée pour le facteur d'amortissement de l'amortisseur (14), dans lequel l'obstacle (32, 34, 36) identifié est dépassé avec la valeur de récupération réglée pour le facteur d'amortissement de l'amortisseur (14) lorsque la valeur du critère de décision présente une valeur de consigne prévue à cet effet.

2. Procédé selon la revendication 1, où l'amortisseur (14), en cas de valeur de récupération réglée pour le facteur d'amortissement, est réglé plus dur que lors d'un passage sur un sol (28) plat pour lequel une valeur de confort est réglée pour le facteur d'amortissement.

3. Procédé selon la revendication 2, où le facteur d'amortissement est réduit de la valeur de récupération à la valeur de confort après le dépassement de l'obstacle (32, 34, 36).

4. Procédé selon l'une quelconque des revendications précédentes, où une puissance mécanique de l'amortisseur (14) est pronostiquée à partir d'un carré d'une vitesse de l'amortisseur (14) multiplié par la valeur de récupération du facteur d'amortissement, et dans lequel la valeur de la quantité d'énergie électrique est déterminée par l'intégration de la puissance dans le temps pendant lequel l'obstacle (32, 34, 36) doit être passé.

5. Procédé selon l'une quelconque des revendications précédentes, où une zone à parcourir à l'avenir du sol (28) est détectée avec l'au moins un capteur (26) et un plan de référence (40) est défini, dont le niveau correspond à une moyenne d'une hauteur de points le long de l'au moins une zone.

6. Procédé selon la revendication 5, où un écart de l'inégalité par rapport au niveau du plan de référence (40) est déterminé comme l'au moins une dimension de l'inégalité.

7. Procédé selon la revendication 6, où une modification de l'écart de l'inégalité par rapport au niveau du plan de référence (40) dans une direction qui est parallèle au plan de référence (40) est déterminée comme l'au moins une dimension de l'inégalité.

8. Procédé selon l'une quelconque des revendications 5 à 7, où une longueur de l'inégalité (40) dans une direction qui est parallèle au plan de référence (40) est déterminée comme l'au moins une dimension de l'inégalité.

9. Procédé selon l'une quelconque des revendications 5 à 8, où une fréquence d'une forme de l'inégalité qui se répète périodiquement dans une direction qui est parallèle au plan de référence (40) est déterminée comme l'au moins une dimension de l'inégalité.

10. Procédé selon l'une quelconque des revendications précédentes, où est utilisé pour le système de suspension de roue (28) au moins un modèle de simulation avec lequel est pronostiquée la valeur de la quantité d'énergie électrique convertissable lors d'un passage sur le sol (28).

11. Système pour faire fonctionner un système de suspension de roue (8, 10) d'un véhicule automobile (2), qui présente un amortisseur (14) par l'intermédiaire duquel une roue (4, 6) est reliée à un châssis (12) du véhicule automobile (2), et une machine électrique (18) affectée à l'amortisseur (14), dans lequel le système (22) présente au moins un capteur (26) pour détecter un environnement du véhicule automobile et un appareil de commande (24), dans lequel l'au moins un capteur (26) est formé pour détecter un sol (28) à parcourir à l'avenir par le véhicule automobile (2), dans lequel l'appareil de commande (24) est formé pour rechercher la présence d'obstacles (32, 34, 36) sur le sol (28) à parcourir à l'avenir, dans lequel une inégalité du sol (28) doit être identifiée comme obstacle (32, 34, 36) lorsqu'une valeur d'au moins une dimension de l'inégalité dévie d'une valeur de tolérance par rapport à une valeur seuil,
**caractérisé en ce que**
l'appareil de commande (24) est formé pour pronostiquer, pour l'obstacle (32, 34, 36) identifié, une valeur d'une quantité d'énergie électrique qui doit être convertie à partir d'énergie mécanique par la machine électrique (18) actionnée comme générateur lorsqu'un facteur d'amortissement avec une valeur de récupération déterminée doit être réglé pour l'amortisseur (14) lors du passage de l'obstacle (32, 34, 36) identifié, dans lequel l'appareil de commande (24) est formé pour pronostiquer, pour l'obstacle identifié, une valeur d'un confort de conduite qui est obtenue lorsque le facteur d'amortissement avec la valeur de récupération est réglé pour l'amortisseur lors du passage de l'obstacle identifié, et dans lequel l'appareil de commande (24) est formé pour déterminer une valeur d'un critère de décision qui est fonction de la valeur de la quantité d'énergie électrique convertie à partir d'énergie mécanique et de la valeur du confort de conduite en cas de valeur de récupération réglée pour le facteur d'amortissement de l'amortisseur (14), et ordonner le dépassement de l'obstacle (32, 34, 36) identifié avec la valeur de récupération réglée pour le facteur d'amortissement de l'amortisseur (14), lorsque la valeur du critère de décision présente une valeur de consigne prévue à cet effet.

12. Système selon la revendication 11, où l'au moins un capteur (26) est disposé au niveau d'une paroi extérieure du véhicule automobile (2), dans lequel une zone de détection (38) de l'au moins un capteur (26) est orientée dans le sens de la marche du véhicule automobile (2).

13. Système selon la revendication 11 ou 12, où l'au moins un capteur (26) est formé pour détecter l'environnement du véhicule automobile (2) sur la base d'ondes à émettre par l'au moins un capteur (26), à réfléchir par au moins un objet dans l'environnement du véhicule automobile (2) et à recevoir de nouveau par l'au moins un capteur (26).
